# EUROPEAN PATENT SPECIFICATION

(11) **EP 2 882 966 B1**
(45) Date of publication and mention of the grant of the patent: **07.11.2018**
(21) Application number: 13827113.5
(22) Date of filing: 26.07.2013
(51) Int. Cl.: F04D 29/60, F04B 53/22, F16M 13/02, F04B 39/14

(54) **AUTO PUMP BRACKET**
KLAMMER FÜR EINE AUTOMATISCHE PUMPE
SUPPORT DE POMPE AUTOMATIQUE

(30) Priority: 10.08.2012 RU 2012134194
(43) Date of publication of application: 17.06.2015
(73) Proprietor: Yazykov, Andrey Yurievich, Moscow 119619 (RU)
(72) Inventor: Yazykov, Andrey Yurievich, Moscow 119619 (RU)
(74) Representative: Smirnov, Alexander
(86) International application number: PCT/RU2013/000641
(87) International publication number: WO 2014/025289

(56) References cited:
- WO-A1-2011/109868
- GB-A- 566 891
- RU-C1- 2 031 255
- RU-C2- 2 465 020
- RU-U1- 98 974
- SU-A1- 1 498 969
- US-A- 998 112
- US-A- 4 013 253
- US-A1- 2011 017 900
- US-B1- 6 220 834
- US-B1- 7 191 998

## Description

### Field of the Invention

The invention refers to the field of hydraulics and is basically an assembly comprising a pump, a supporting structure designed to fix the auto pump, provided with the horizontal cylindrical hydroaccumulator, on the vertical face (a wall or a column).

### Prior Art

There is a composite lift-up assembly for the mounting assembly, including the L-shaped profile with the lateral comb-type bearing surface with an anchor and a gasket, provided with the carrier guide profile having lateral comb-type bearing surface, which lower part contains the box console with a free aperture and longitudinal shoulders on the internal side walls, and the comb-type bearing surfaces of the L-shaped and box console profiles are provided with the coaxial longitudinal slots for installation of split-type members fixing them relative to one another, and the internal side walls of the box console and the longitudinal shoulders interact with the H-shaped vertical girth rail having longitudinal slots outside on top, and the bottom of the vertical girth rail is provided with longitudinal shoulders inside (RU Nº 44705).

There is an assembly, having the upper and the lower bearing members, with the upper member made up of a vertical and a horizontal part, and the above mentioned vertical part is provided with a hole for the fastener, and the horizontal part of the upper member represents a frame, the lower bearing member is made up minimum of two upright posts, each of them is rigidly connected to the said frame on the top end, and is provided with the fastener on the bottom end that can interact with the hollow in the bearing surface. Horizontal part of the upper member represents a rectangular frame with stiffeners at the angles and is connected to the lower bearing member by means of rigid braces (RU Nº 36951).

There is an assembly for fastening of the transport vehicle hydraulic power steering pump, containing the support with the mounting holes, the support represents a plate with the upper and the lower surfaces shaped as truncated rectangular trapezium with the front face, the rear face and the side faces, the truncate side face, the support also contains additional shoulders running parallel to each other, with the mounting holes (RU Nº 98974).

There is also an assembly or other element suspension on the upright bearing post, comprising a rail with a base and holes for fastening to the vertical wall, provided with the console to post connectors, and the assembly is made up of the front part, to which the console or other device element, e.g. a rack, is fastened, and the rear part on the rear of the bearing post passing inside the assembly, the front and the rear parts of the assembly are connected using strut side members on the both sides of the bearing post, and the rear part of the assembly is above the front, and there are fasteners provided on the front, rear or both parts of the assembly to fasten the assembly to the post from top to bottom, the fastener(s) are turned inside towards the bearing post, provided with the holes along the post in line with the fasteners so that the fastener(s) could match the holes, the front and the rear parts of the assembly are supported by the post, and the load is transferred from the console to the post (RU Nº 54296).

From the prior art it is known a bracket (assembly) claimed in the US 4013253, which has a rail (32) with the base and the holes for fastening to the vertical wall (40), and two pairs of guides (49), in pairs making up the slots narrowing towards the bottom, to allocate the top ends of the posts (10).

This device is intended for use as a supporting element for equipment in the form of a rod or a pipe, for connecting the guide with the rail (32) requires the slots (44, 45) and clamps (46, 48) without which the shelf (9) will simply straighten up or fall out of the guide slots (44, 45) under its own weight or a small load.

The bracket claimed in the US 4013253 has not flange with a hole to fasten the installed equipment, has not posts connected with the arched console by means of the stiffeners and the strut, with at least one tangential flange with a hole to fasten the installed equipment. The force of the weight of equipment placed on the flange on bracket, not transmitted directly from the flange on vertical support (wall), as posts (10) have contact only with the rail (32) through slots (44, 45). In this regard, the device has a low load-bearing capacity.

In connection with the said above, the device disclosed in the US 4013253 can not realize the functional destination of the claimed device to fasten the pump (17), provided with the horizontal cylindrical hydroaccumulator (14) on the vertical wall (3).

From the prior art it is also known an assembly claimed in the US 998112 (prototype), which has a rail (P) with the base and the holes (G) for fastening to the vertical support (B), and one pairs of guides (F), in pairs making up the slots narrowing towards the bottom, to allocate the top ends of the post (A).

The assembly according to the US 998112 is designed for use as a support element for the construction site in the form of piping; to connect guides with a rail the slots (G) are needed, in case of its absence the shelf simply fall out of the guide grooves (C) under its own weight or a small load.

The assembly disclosed in the US 998112 has not flange with a hole to fasten the installed equipment, has not posts connected with the arched console by means of the stiffeners and the strut, with at least one tangential flange with a hole to fasten the installed equipment. The force of the weight of equipment, placed on the flange on bracket, not transmitted directly to the flange on vertical support (wall), since the post (A) is in contact only with the rail (P) through the slot "C". In this regard, the device has a low load-bearing capacity.

The above characteristics and analysis speak to a fact that the device disclosed in the US 998112 can not realize the functional destination of the claimed device to fasten the pump (17), provided with the horizontal cylindrical hydroaccumulator (14) on the vertical wall (3).

Summarizing the above, there is a good reason for a statement that prior art devices disclosed in the US 998112 and US 4013253 do not contain, either together or separately, the claimed combination of features of the claimed device. Moreover, these devices have a low load-bearing capacity and that is why these devices can not provide a reliable installation of horizontal cylindrical hydroaccumulator and the pump, the work of which may be accompanied by vibrations.

The drawback of available assemblies is a problematic mounting on the wall or on the column, difficulty of pump equipment installation, low maintainability, short service life in case the pump operation entails vibration, no possibility of nondestructive dismantling, parts replacement and reassembly for repeated use.

### Summary of the Invention

The engineering task of the invention is creation of an efficient assembly comprising a pump and expansion of a store of the assembly comprising a pump.

The engineering result ensuring solution of the assigned task lies in simplification of mounting on the wall or on the column, simplification of pump equipment installation, improvement of maintainability, service life in case of pump operation on the console, support of a possibility of dismantling and reassembly for repeated use of the assembly.

The essence of the invention is that the assembly comprising a pump is provided with a horizontal cylindrical hydroaccumulator and a bracket to fix the pump and the hydroaccumulator on a vertical wall, wherein the assembly comprising a rail with a base and holes for fastening to the vertical wall and two pairs of guides in pairs making up slots narrowing towards the bottom to allocate top ends of posts connected with two arched consoles by means of stiffeners and a strut to the arched console tangent to which there is at least one flange with the hole to fasten the installed pump and hydroaccumulator through elastic dampers.

It is preferred if the a trapezoid shape of the pairs of slots is narrowing towards the bottom.

It is preferred if the shape of the top ends of posts is matching with the shape of the narrowing rail slots.

It is preferred if the posts are wider than each arched console at one end of the post.

It is preferred if assembly is comprised the sloping stiffeners.

It is preferred if each of the arched consoles represents a strip of a constant width. The flanges are provided with triangular supports and two holes. Each post is joined with the strut, the console, the stiffeners, and the flange. The stop is provided in the post to strut junction point on the vertical wall. The arched consoles are provided with cylindrical sections, turning flat on top and at the bottom. The arched consoles with the cylindrical sections are matching with the shape of an installed equipment, particularly hydroaccumulator. The holes on flanges are provided for a possibility of fastening of hydroaccumulator supports.

### Short description of drawings

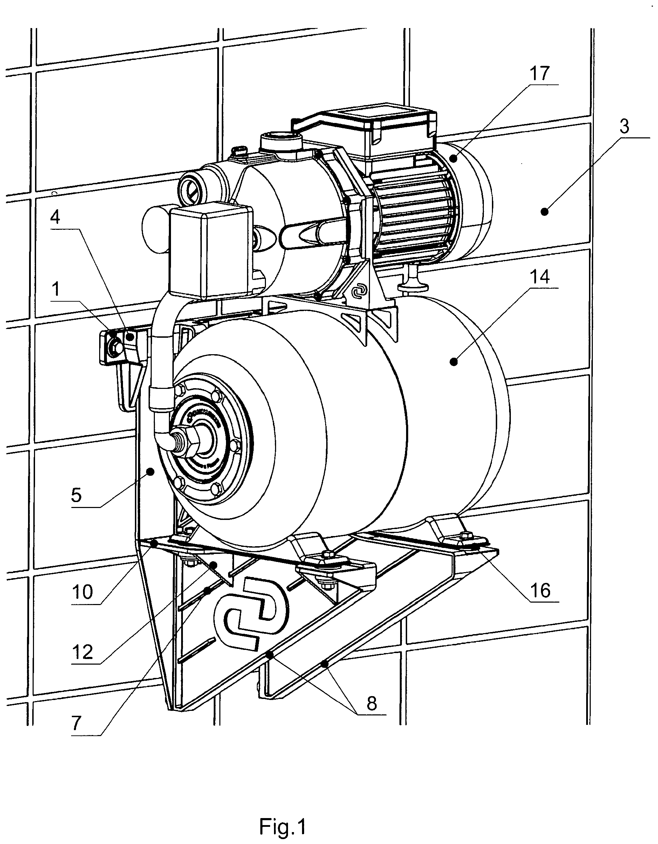

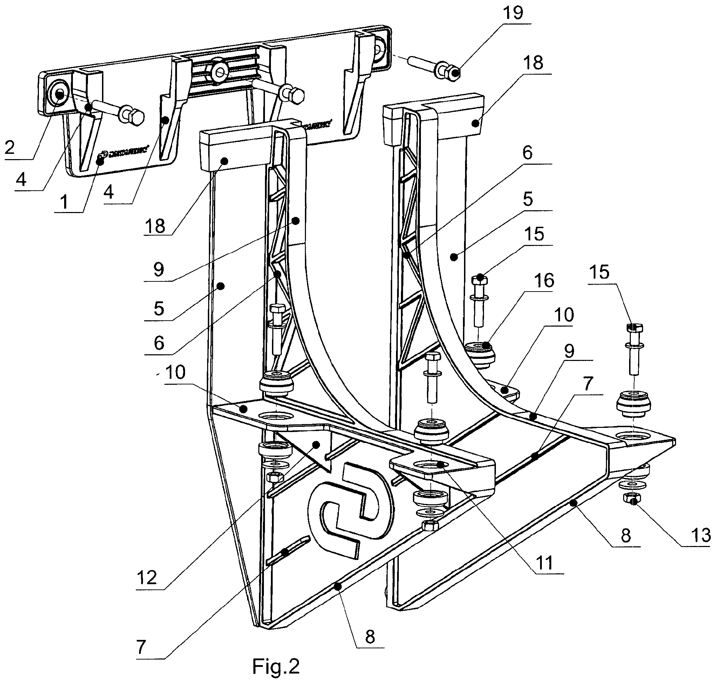

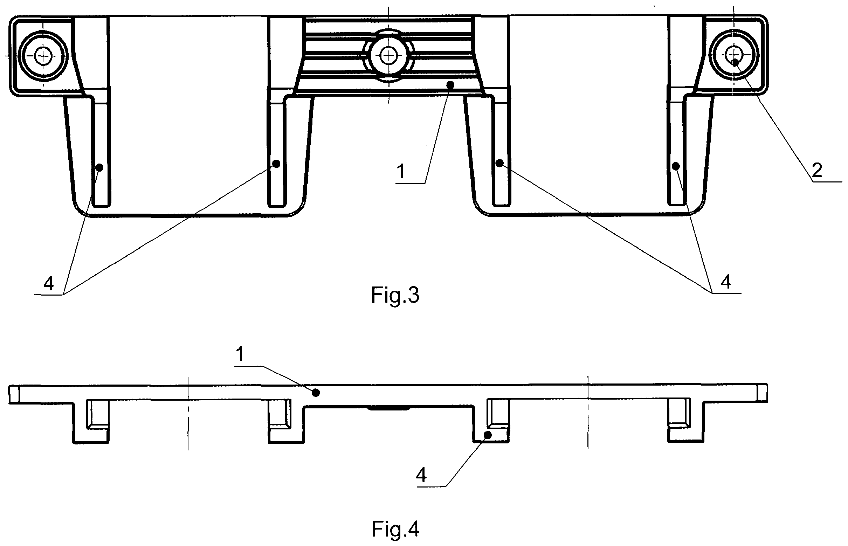

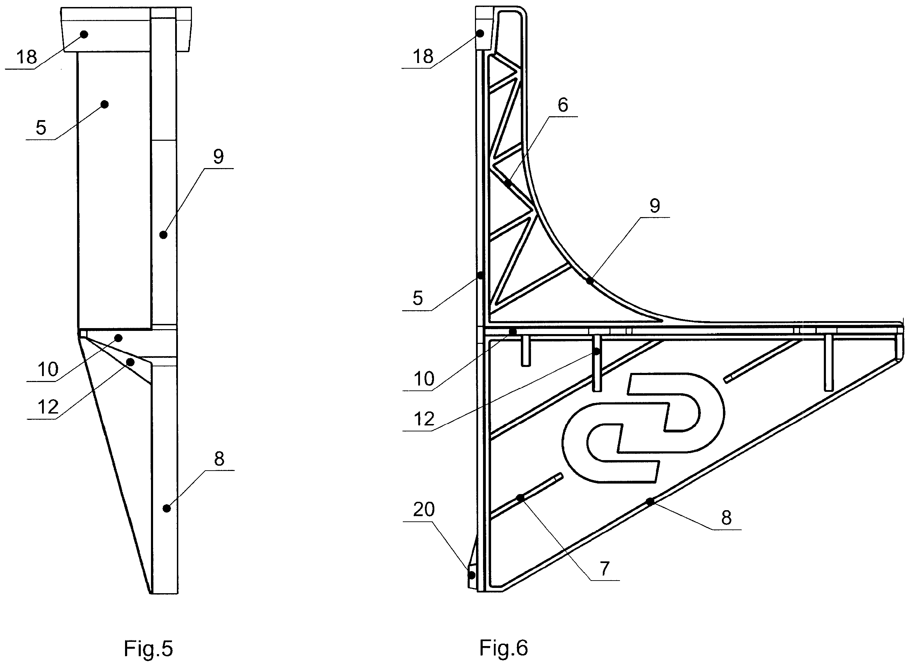

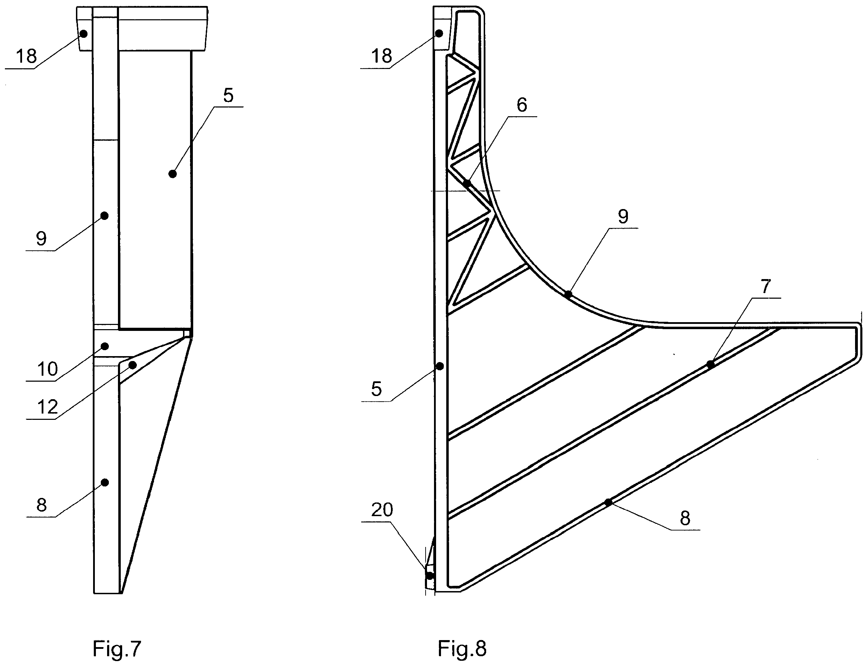

Fig.1 shows the structural layout of the assembly comprising a pump and auto pump installation, fig. 2 - the assembly comprising a pump exploded, fig.3 - the rail, fig. 4 - the top view of the fig.3, fig.5 - the left console, fig. 6 - the right-side view of the fig.5, fig.7 - the right console, fig. 8 - the right-side view of the fig.7.

The assembly comprising a pump includes the rail 1 with the base (flat bearing surface) and holes 2 for fastening to the vertical support, e.g. to the wall 3, and two pairs of guides 4, in pairs making up the slots narrowing towards the bottom to allocate the top ends of the posts 5, each connected by means of the stiffeners 6,7 and the strut 8 to the arched console 9, tangent to which there is at least one flange 10 with the hole 11 to fasten the installed equipment.

The pairs of slots, made up by the guides 4, narrowing towards the bottom are trapezoid (of trapezoid profile, with the trapezoid-shaped cross-section).

The top ends 18 of the posts 5 match the shape of the narrowing slots (of trapezoid profile, with the trapezoid-shaped cross-section), made up by the guides 4 of the rail 1, i.e. with the trapezoid shape of the above mentioned slots the top ends 18 of the posts 5 have a trapezoid shape.

The posts 5 are wider than the ached consoles 9, each located at one of the vertical ends of the post 5.

The stiffeners 6, 7 are sloping to the posts 5 and together with the struts 8 and with the consoles 9.

Each of the ached consoles 9 represents a strip of a constant width.

The ends of the flanges 10 are connected to the posts 5 and are provided with the triangular supports (slopes) 12 and two holes 11.

The flange 10 of one of the consoles 9 is on the right, and of the other - on the left. Each post 5 is joined with the strut 8, the console 9, the stiffeners 6, 7, and the flange 10.

The post 5 in the post to strut 8 junction point is provided with the stop 20 on the side of the vertical support 3.

Each of the ached consoles 9 has a cylindrical section tangentially turning flat on top and at the bottom (not shown).

The ached consoles 9 have cylindrical sections matching the shape of the installed equipment, particularly the cylindrical body of the horizontal hydroaccumulator 14.

The holes 11 of the flanges 10 provide for a possibility of fastening with the screws 15 and the nuts 13 through the elastic dampers 16 of the hydroaccumulator 14 supports, connected to the auto pump 17 with the electric motor, installed above. To fasten the rail 1 to the wall 3 there are the accessories 19.

All pats of the bracket, shown in fig.3-8, are stamped or cast of plastic under pressure (durable plastic).

### Detailed Description of the Invention

### Preferred embodiment

The assembly comprising a pump is operated as follows.

The rail 1 is fixed (fastened) to the wall 3 through the holes 2 using the accessories 19. The ends 18 of the posts 5 are firmly inserted into the narrowing slots, made up by the guides 4 of the rail 1. And the stops 20 of the posts 5 rest against the wall 3, and the consoles 9 protrude forward and together with the flanges 10 and the struts 8 engage in a working position.

The auto pump 17 together (assembled) with the hydroaccumulator 14 is fastened through the holes 11 to the flanges 10 with the screws 15 through the elastic dampers (gaskets) 16. After the main lines of the pump 17 are connected to fluid source and to the consumer, it is ready for operation.

During operation of the pump 17 the bracket woks according to the mechanical principle of operation - material resistance to fracture and shear. The strut 8 squeezes and supports the structural members of the console 9, due to its arched shape and availability of the strut 8, stability of the turned on pump is assured. The stiffeners 6,7 ensure the required rigidity of the construction, and the elastic dampers 16 prevent the pump vibration transfer to the rail 1.

The hydroaccumulator (horizontal) 14 is designed to protect the pump against frequent activation that promotes extension of the pump 17 life.

In case it is necessary to change the place of operation of the pump 17, the screws 15 are removed and the hydroaccumulator 14 and the pump 17 are dismantled. The posts 5 are taken out of the slots of the rail 1, and the latter is removed from the wall 3, for which purpose the accessories 19 are removed. All bracket parts are completely serviceable and replaceable after dismantling, if necessary, they can be easily replaced and compactly packed for transportation. At a new place of operation the similar procedure of assembly comprising a pump installation is carried out.

The claimed assembly, in comparison with that as claimed in US 4013253, has a high load-bearing capacity thanks to the stiffeners (6,7) and the arched console (9), at least one tangential flange with a hole to fasten the installed equipment (14,17). The force of the weight of equipment (14,17) placed on the flanges (10), is transmitted through the strut (8) directly onto the vertical wall, unloading rail (1). Strut (8) carries out the work on the compression and maintenance of structural elements console (9), through which the arched shape and the presence of strut 8 is provided girth and stable position hydroaccumulator (14) and pump (17) when the condition of the latter. Stiffeners (6,7) provide the necessary rigidity while elastic dampers (16) prevent vibration transfer pump (17) on the rail (1).

Thereby, a spontaneous loss of flanges (10) has been avoided. Thus, it is possible to install the hydroaccumulator (14) and the pump (17).

The claimed device, in comparison with that as claimed in the US 998112, has a high load-bearing capacity thanks to the stiffeners (6, 7) and the arched console (9), at least one tangential flange with a hole to fasten the installed equipment (14,17). The force of the weight of equipment (14,17), placed on the flanges (10), is transmitted through the strut (8) directly onto the vertical wall, unloading the rail (1). Strut (8) carries out the work on the compression and maintaining the elements of consoles (9), where in through the arched shape of consoles (9) and the presence of strut (8) girth and stable position of the hydroaccumulator (14) and pump (17) in working state is provided. Stiffeners (6, 7) provide the necessary rigidity while elastic dampers (16) prevent a transfer of vibration to the pump (17) on the rail (1).

Thereby a spontaneous loss of flanges (10) is prevented. Thus, it is possible to install the hydroaccumulator (14) and the pump (17).

The claimed assembly comprising a pump have a high load-bearing capacity and that is why this assembly can provide a reliable installation of horizontal cylindrical hydroaccumulator and the pump, the work of which may be accompanied by vibrations.

Realization of the set of attributes of the invention integrated within the single creative concept results in obtaining of simplified operations and reduction of the time of mounting on the wall or the column due to reduction of the number of operations and their simplification, simplified installation of the pump equipment on the arched surfaces of the consoles, equally spaced along the equipment installed on the console, improved maintainability due to a possibility of any bracket part replacement, extended service life in case the pump operation entails vibration due to availability of the stiffeners along with the strut and the flanges, ensured possibility of dismantling, compact storage and transportation, and reassembly of the posts with the strut and the console on the rail for repeat and further usage.

### Industrial Applications

The present invention is embodied with multipurpose equipment extensively employed by the industry.

## Claims

1. An assembly comprising a pump (17), provided with a horizontal cylindrical hydroaccumulator (14), and a bracket to fix the pump (17) and the hydroaccumulator (14) on a vertical wall (3), wherein the assembly comprising a rail (1) with a base and holes (2) for fastening to the vertical wall (3), and two pairs of guides (4), in pairs making up slots narrowing towards the bottom, to allocate top ends of two posts (5), each post being connected by means of stiffeners (6, 7) and a strut (8) to an arched console (9), tangent to which there is at least one flange (10) with a hole (11) to fasten the installed pump (17) and hydroaccumulator (14) through elastic dampers (16).

2. The assembly according to Claim 1, **characterized in that** a trapezoid shape of the pairs of slots is narrowing towards the bottom.

3. The assembly according to Claim 2, **characterized in that** the shape of the top ends (18) of posts (5) is matching with the shape of the narrowing rail slots.

4. The assembly according to Claim 3, **characterized in that** the posts (5) are wider than each arched console (9) at one end of the post (5).

5. The assembly according to Claim 1, **characterized in that** the stiffeners (6, 7) are sloping stiffeners.

6. The assembly according to any of Claims 1-5, **characterized in that**, each of the arched consoles (9) represents a strip of a constant width.

7. The assembly according to any of Claims 1-5, **characterized in that** the flanges (10) are provided with triangular supports (12) and two holes (11).

8. The assembly according to any of Claims 1 -5, **characterized in that** the each post (5) is joined with the strut (8), the console (9), the stiffeners (6,7), and the flange (10).

9. The assembly according to any of Claims 1 -5, **characterized in that** the stop (20) is provided in the post (5) to strut (8) junction point on the vertical wall (3).

10. The assembly according to any of Claims 1-5, **characterized in that** the arched consoles (9) are provided with cylindrical sections, turning flat on top and at the bottom.

11. The assembly according to any of Claims 1-5, **characterized in that** the arched consoles (9) with the cylindrical sections are matching with the shape of an installed equipment, particularly hydroaccumulator (14).

12. The assembly according to Claim 11, **characterized in that** the holes (11) on flanges (10) are provided for a possibility of fastening of hydroaccumulator (14) supports.

## Patentansprüche

1. Baueinheit, umfassend eine Pumpe (17), die mit einem horizontalen zylindrischen Druckflüssigkeitsspeicher (14) ausgerüstet ist, und einen Tragarm zum Fixieren der Pumpe (17) und des Druckflüssigkeitsspeichers (14) an der senkrechten Wand (3), wobei die Baueinheit eine Schiene (1) mit einem Boden und Öffnungen (2) zur Befestigung an der senkrechten Wand (3) und zwei Paar Führungsschienen (4) umfasst, die paarweise angeordnete, in Richtung des Bodens sich verengende Nuten bilden, um die oberen Enden von zwei Ständern (5) anzuordnen, wobei jeder Ständer durch Versteifungsrippen (6, 7) und eine Schrägstütze (8) mit einer bogenförmigen Konsole (9) verbunden wird, in deren Tangentialrichtung mindestens ein Flansch (10) mit einer Öffnung (11) vorgesehen ist, um die installierte Pumpe (17) und den Druckflüssigkeitsspeicher (14) durch elastische Dämpfer (16) zu befestigen.

2. Baueinheit nach Anspruch 1, **dadurch gekennzeichnet, dass** die in Richtung des Bodens sich verengenden Nutenpaare in Trapezform ausgebildet sind.

3. Baueinheit nach Anspruch 2, **dadurch gekennzeichnet, dass** die Form der oberen Enden (18) der Ständer (5) mit der Form sich verengender Nuten der Schiene zusammenfällt.

4. Baueinheit nach Anspruch 3, **dadurch gekennzeichnet, dass** die Ständer (5) in grösserer Breite ausgebildet sind, als jede bogenförmige Konsole (9) an einem Ende des Ständers (5).

5. Baueinheit nach Anspruch 1, **dadurch gekennzeichnet, dass** die Versteifungsrippen (6, 7) als geneigte Versteifungsrippen ausgebildet sind.

6. Baueinheit nach einem der Ansprüche 1 bis 5, **dadurch gekennzeichnet, dass** jede der bogenförmigen Konsolen (9) einen Streifen mit konstanter Breite darstellt.

7. Baueinheit nach einem der Ansprüche 1 bis 5, **dadurch gekennzeichnet, dass** die Flansche (10) mit Dreieckträgern (12) und zwei Öffnungen (11) ausgestattet sind.

8. Baueinheit nach einem der Ansprüche 1 bis 5, **dadurch gekennzeichnet, dass** jeder Ständer (5) mit der Schrägstütze (8), der Konsole (9), den Versteifungsrippen (6, 7) und dem Flansch (10) verbunden wird.

9. Baueinheit nach einem der Ansprüche 1 bis 5, **dadurch gekennzeichnet, dass** eine Knagge (20) im Verknüpfungspunkt des Ständers (5) mit der Schrägstütze (8) an der senkrechten Wand (3) vorgesehen ist.

10. Baueinheit nach einem der Ansprüche 1 bis 5, **dadurch gekennzeichnet, dass** die bogenförmigen Konsolen (9) mit zylindrischen Bereichen ausgebildet sind, die oben und am Boden in flache Bereiche übergehen.

11. Baueinheit nach einem der Ansprüche 1 bis 5, **dadurch gekennzeichnet, dass** die bogenförmigen Konsolen (9) mit den zylindrischen Bereichen ihrer Form nach der installierten Ausrüstung, insbesondere dem Druckflüssigkeitsspeicher (14), entsprechen.

12. Baueinheit nach Anspruch 11, **dadurch gekennzeichnet, dass** die Öffnungen (11) an den Flanschen (10) mit Möglichkeit der Befestigung der Stützen des Druckflüssigkeitsspeichers (14) ausgebildet sind.

## Revendications

1. Un dispositif complet est constitué d'une pompe (17), équipée d'un accumulateur hydraulique cylindrique horizontal (14), et d'un support pour la fixation de la pompe (17) et de l'accumulateur hydraulique (14) sur une paroi verticale (3), en outre le dispositif complet est équipé d'un rail (1) avec une embase et des orifices (2) pour la fixation sur la paroi verticale (3) et deux paires de guides (4), constituant des fentes en paires, se rétrécissant vers le fond pour recevoir les extrémités supérieures de deux montants (5), chaque montant est relié, à l'aide des renforts (6, 7) et d'une entretoise (8), avec un bras arqué (9), au moins une bride (10) avec un orifice (11) pour la fixation de la pompe montée (17) et de l'accumulateur hydraulique (14) passe tangentiellement par rapport au bras arqué (9) par l'intermédiaire des volets élastiques (16).

2. Le dispositif complet selon la revendication 1, **caractérisé par** une forme trapézoïdale des paires de fentes qui se rétrécissent vers le fond.

3. Le dispositif complet selon la revendication 2, **caractérisé par** la forme des extrémités supérieures (18) des montants (5), coïncidant avec la forme des fentes des rails, qui se rétrécissent.

4. Le dispositif complet selon la revendication 3, **caractérisé par** ce que les montants (5) sont plus larges que chaque bras arqué (9) d'un côté du montant (5).

5. Le dispositif complet selon la revendication 1, **caractérisé par** ce que les renforts (6, 7) représentent les renforts biseautés.

6. Le dispositif complet selon l'une quelconque des revendications requises 1 à 5, **caractérisé par** ce que chacun des bras arqués (9) représente une bande de largeur constante.

7. Le dispositif complet selon l'une quelconque des revendications requises 1 à 5, **caractérisé par** ce que les brides (10) sont équipées de supports triangulaires (12) et de deux orifices (11).

8. Le dispositif complet selon l'une quelconque des revendications requises 1 à 5, **caractérisé par** ce que chaque montant (5) est relié avec l'entretoise (8), le bras (9), les renforts (6, 7) et la bride (10).

9. Le dispositif complet selon l'une quelconque des revendications requises 1 à 5, **caractérisé par** ce que la butée (20) est prévue dans le montant (5) dans le point de raccordement de l'entretoise (8) sur la paroi verticale (3).

10. Le dispositif complet selon l'une quelconque des revendications requises 1 à 5, **caractérisé par** ce que les bras arqués (9) sont équipés des sections cylindriques aplaties en haut et en bas.

11. Le dispositif complet selon l'une quelconque des revendications requises 1 à 5, **caractérisé par** ce que les bras arqués avec les sections cylindriques correspondent dans la forme aux équipements montés, notamment, à l'accumulateur hydraulique (14).

12. Le dispositif complet selon le revendication 11, **caractérisé par** ce que les orifices (11) dans les brides (10) ont une possibilité de fixer les supports de l'accumulateur hydraulique (14).
